# FASCICULE DE BREVET EUROPEEN

(11) **EP 2 148 289 B1**
(45) Date de publication et mention de la délivrance du brevet: **03.09.2014**
(21) Numéro de dépôt: 09165995.3
(22) Date de dépôt: 21.07.2009
(51) Int. Cl.: G06K 7/00

(54) **Détection de présence d'un élément de communication sans contact à portée d'un terminal**
Präsenzerfassung eines kontaktlosen Kommunikationselements in Reichweite eines Endgeräts
Detection of the presence of a contactless communication element within range of a terminal

(30) Priorité: 25.07.2008 FR 0855110
(43) Date de publication de la demande: 27.01.2010
(73) Titulaire: STMicroelectronics (Rousset) SAS, 13790 Rousset (FR)
(72) Inventeur: Charles, Alexandre, 13390 Auriol (FR); Conraux, Jérôme, 13530 Trets (FR); Malherbe, Alexandre, 13530 Trets (FR); Tramoni, Alexandre, 83370 Saint Aygulf (FR)
(74) Mandataire: Thibon, Laurent

(56) Documents cités:
- EP-A- 1 840 790
- WO-A-00/42585
- US-B1- 6 531 957

## Description

### Domaine de l'invention

La présente invention concerne de façon générale des circuits électroniques et, plus particulièrement, les terminaux de communication sans contact avec des éléments distants de type transpondeurs électromagnétiques.

L'invention s'applique plus particulièrement aux systèmes de communication à courte portée (inférieure à quelques mètres), par exemple les systèmes désignés sous la dénomination communication en champ proche (Near Field Communication - NFC).

### Exposé de l'art antérieur

Dans des systèmes de communication en champ proche pour lesquels on ne se préoccupe pas de la consommation d'énergie du terminal, ce dernier émet périodiquement (par exemple toutes les demi secondes) une trame d'interrogation à destination de transpondeurs susceptibles de se trouver dans son champ. Lorsqu'un transpondeur capte cette trame, il y répond. La trame d'interrogation revient à moduler une porteuse selon un codage prédéfini. La porteuse correspond à un signal alternatif à la fréquence sur laquelle sont accordés les circuits oscillants du terminal et du transpondeur.

Dans des systèmes pour lesquels on cherche à minimiser la consommation du terminal, ces trames d'interrogation ne sont émises que lorsqu'un transpondeur a été préalablement détecté par le terminal. Pour cela, on exploite le fait que le circuit résonnant que comporte le transpondeur constitue, même en l'absence de transmission, une charge sur le circuit oscillant du terminal dans le champ duquel il se trouve. Cette variation de charge en présence d'un transpondeur est alors détectée pour considérer qu'un transpondeur est présent dans le champ et est susceptible de communiquer avec le terminal. Généralement, le terminal excite périodiquement (par exemple, toutes les demi secondes) son circuit oscillant sans moduler la porteuse avec des données et détecte une éventuelle diminution de la tension aux bornes de l'antenne par rapport à une valeur de référence. Cela permet de diminuer la consommation du terminal.

Toutefois, pour que la détection soit fiable, la fréquence d'excitation du circuit oscillant doit être précise. La génération d'une telle fréquence requiert classiquement un oscillateur à quartz. Un tel oscillateur engendre une consommation relativement importante à chaque démarrage du quartz.

De plus, en présence d'un transpondeur dont le circuit résonnant n'est pas parfaitement accordé, on risque des erreurs de détection.

Le document EP-A-1 840 790 décrit un procédé de détection d'un transpondeur pour identifier le type de transpondeur auquel il appartient et prévoit d'exciter un circuit oscillant avec trois fréquences fixes.

### Résumé

Il serait souhaitable de disposer d'un circuit de détection de présence d'un transpondeur électromagnétique dans le champ d'un terminal qui pallie tout ou partie des inconvénients des circuits usuels.

Il serait en particulier souhaitable d'éviter le recours à un oscillateur à quartz dans les phases de détection de présence.

Il serait par ailleurs souhaitable de rendre le fonctionnement du détecteur indépendant d'éventuelles dérives dans la fréquence d'accord du circuit résonant du terminal ou du transpondeur.

Pour atteindre tout ou partie de ces objets ainsi que d'autres, il est prévu un procédé de détection de présence d'un élément de communication sans contact par un terminal émettant un champ électromagnétique, tel que décrit dans la revendication 1.

Il est également prévu un procédé de commande d'un terminal émettant un champ électromagnétique pour communication avec un élément sans contact, dans lequel des phases de communication sont déclenchées quand un élément est détecté dans le champ par le procédé de la revendication 1, un oscillateur à quartz étant utilisé pendant les phases de communication.

Il est également prévu un circuit de détection de présence d'un élément de communication sans contact, par un terminal d'émission d'un champ radiofréquence, tel que décrit dans la revendication 6.

Il est également prévu un terminal de communication avec au moins un élément de communication sans contact, comportant un tel circuit de détection.

Selon un mode de réalisation de la présente invention, le terminal comporte en outre un oscillateur à quartz.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-blocs d'un système de communication du type auquel s'applique à titre d'exemple la présente invention ;
la figure 2 est un schéma partiel et simplifié d'un détecteur de présence usuel d'un transpondeur dans le champ d'un terminal ;
la figure 3 est un schéma-blocs simplifié d'un mode de réalisation d'un détecteur de présence d'un élément de communication sans contact dans le champ d'un terminal ;
les figures 4A, 4B, 4C et 4D sont des chronogrammes illustrant un mode de mise en oeuvre du procédé de détection d'un élément de communication sans contact ; et
la figure 5 est un schéma-blocs d'un mode de réalisation du procédé de détection de présence.

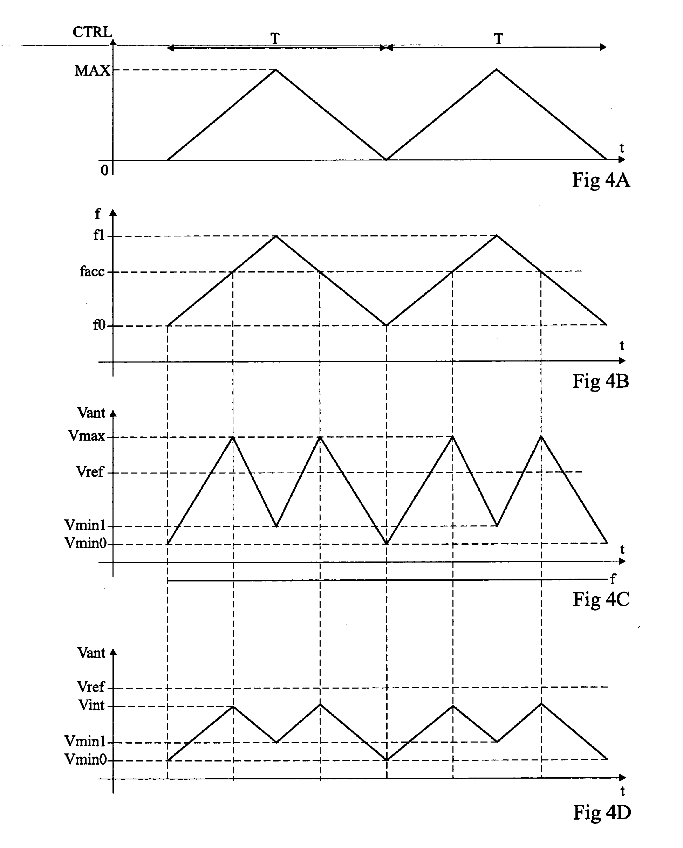

De mêmes éléments ont été désignés par de mêmes références aux différentes figures dont les chronogrammes des figures 4A à 4D ont été tracés sans respect d'échelle.

Par souci de clarté, seuls les étapes et éléments utiles à la compréhension de l'invention ont été représentés et seront décrits. En particulier, l'interprétation par le terminal de la détection de présence d'un transpondeur n'a pas été détaillée, l'invention étant compatible avec l'exploitation usuelle d'une telle détection. De plus, les trames de communication entre terminal et transpondeur n'ont pas non plus été détaillées, l'invention étant là encore compatible avec les modes classiques de communication.

### Description détaillée

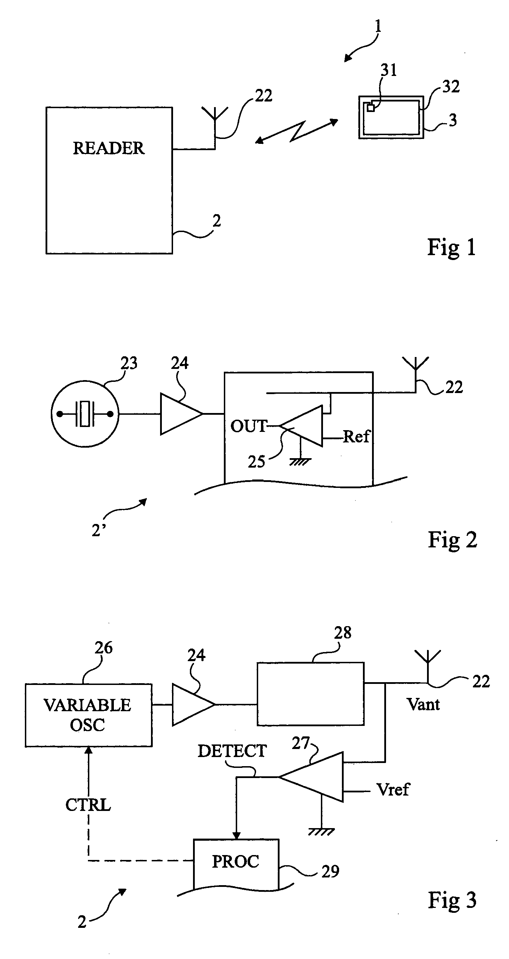

La figure 1 est une représentation schématique d'un système 1 de communication en champ proche entre un terminal 2 (READER) de lecture ou de lecture-écriture et un élément de communication sans contact ou transpondeur 3 (dans cet exemple une carte à puce). Typiquement, le transpondeur 3 comporte un ou plusieurs circuits électroniques 31 et une antenne 32 susceptible de capter un champ rayonné par une antenne 22 du terminal 2. Généralement, les circuits 31 du transpondeur extraient l'alimentation nécessaire à leur fonctionnement du champ rayonné par le terminal 2.

Par exemple, le transpondeur 3 est une carte sans contact, un circuit électronique miniature ou portable, etc., et le terminal 2 est une borne d'accès ou de validation de titres de transport, un terminal de paiement, etc. Dans un autre exemple d'application, le terminal 2 est lui-même constitué d'un dispositif portable alimenté par batterie (par exemple un téléphone cellulaire).

La figure 2 est un schéma-blocs partiel et simplifié d'éléments d'un terminal 2' servant usuellement à la détection de présence d'un transpondeur dans le champ rayonné par l'antenne 22. Typiquement, on utilise un oscillateur à quartz 23 pour exciter, par l'intermédiaire d'un amplificateur 24, le circuit oscillant du terminal (non représenté hormis l'antenne 22). La tension aux bornes de l'antenne 22 est comparée (comparateur 25) à une référence Ref pour détecter la présence éventuelle d'un transpondeur. Cette présence se traduit par une variation de niveau de la tension aux bornes de l'antenne qui, quand un transpondeur est présent, devient inférieur au niveau de référence et provoque une commutation du signal OUT de sortie du comparateur 25 entre ses deux états binaires.

L'oscillateur à quartz 23 doit être accordé sur la fréquence de résonance du système (par exemple, 13,56 mégahertz) de façon à pouvoir détecter la variation de champ en présence d'un transpondeur dont le circuit résonnant est lui-même accordé sur cette fréquence de 13,56 mégahertz. Toutefois, en cas de décalage de cette fréquence de résonance, le circuit risque de faire des erreurs de détection.

De plus, le recours à un quartz pendant les phases d'attente de communication (pendant les phases de détection de présence) représente une consommation relativement importante quasi-permanente.

La figure 3 est un schéma-blocs à rapprocher de celui de la figure 2 illustrant un mode de réalisation d'un détecteur de présence d'un transpondeur équipant un terminal 2 de communication sans contact. On retrouve une antenne 22 susceptible d'être excitée par l'intermédiaire d'un amplificateur 24 et faisant partie d'un circuit oscillant (schématisé par un bloc 28).

Selon ce mode de réalisation, lorsque le terminal 2 est en mode détection de présence, son circuit oscillant est excité par un signal fourni par un oscillateur 26 (VARIABLE OSC) à fréquence variable. La tension Vant aux bornes de l'antenne 22 est comparée par rapport à une tension de référence Vref pour détecter (signal DETECT en sortie d'un comparateur 27) la présence éventuelle d'un transpondeur.

L'oscillateur 26 est commandé (signal CRTL) par exemple par une source de tension ou par une source de courant variable de façon à faire varier périodiquement sa fréquence au cours du temps dans une période de recherche de transpondeur. L'oscillateur 26 n'a pas besoin d'être précis dans la mesure où toute une gamme de fréquences autour de la fréquence d'accord est balayée pendant la période de détection.

La commande des différents constituants du terminal et l'interprétation de la détection sont effectuées, par exemple, par un circuit de traitement 29. Un tel circuit est, par exemple, un processeur de traitement numérique (microprocesseur ou autre) servant aux autres tâches du terminal. La programmation d'un tel circuit permet la génération des cycles périodiques du signal d'excitation à fréquence variable.

Les figures 4A, 4B, 4C et 4D sont des chronogrammes illustrant un exemple de fonctionnement du terminal de la figure 3. La figure 4A est un exemple d'allure du signal de commande CRTL de l'oscillateur variable 26. La figure 4B est un exemple d'allure de la fréquence f du signal fourni par l'oscillateur 26 en fonction du temps. Les figures 4C et 4D sont des exemples d'allure de la tension Vant aux bornes de l'antenne respectivement en l'absence de transpondeur dans le champ et en présence d'un tel transpondeur.

On suppose qu'une phase de détection de présence consiste à émettre, périodiquement (par exemple toutes les secondes ou toutes les demi secondes), un signal de fréquence variable entre deux fréquences f0 et f1 encadrant la fréquence théorique d'accord f_{acc} du circuit oscillant du terminal. Dans l'exemple des figures 4A à 4D, on suppose que cette variation de fréquence est effectuée pendant deux périodes T au cours desquelles (figure 4B) la fréquence croît entre les valeurs f0 et f1 pour décroître dans la deuxième partie de chaque période. La figure 4A illustre l'exemple d'un signal de commande utilisé pour faire croître une tension ou un courant d'une source de tension ou de courant de l'oscillateur variable 26. Ce signal croît entre une valeur nulle pour laquelle l'oscillateur 26 est à une fréquence qui correspond approximativement à la fréquence f0 et une valeur maximale MAX pour laquelle l'oscillateur est à une fréquence qui correspond approximativement à la fréquence f1.

En l'absence de transpondeur électromagnétique dans le champ (figure 4C), la tension Vant aux bornes de l'antenne part d'un minimum Vmin pour la fréquence f0 pour atteindre un maximum Vmax lorsque la fréquence d'accord est atteinte puis décroît jusqu'à une valeur Vmin1 à la fréquence f1. Les valeurs Vmin0 et Vmin1 ne sont pas nécessairement identiques. Lorsque la fréquence diminue entre les fréquences f1 et f0, la tension Vant commence par croître depuis la tension Vmin1 jusqu'à atteindre la tension Vmax et décroître jusqu'à la valeur Vmin0.

Si un transpondeur est présent dans le champ (figure 4D), il modifie la charge du circuit résonnant essentiellement à la fréquence d'accord f_{acc}. Il en découle que les niveaux Vmin0 et Vmin1 ne sont pas forcément modifiés ou ne le sont que faiblement. Par contre, la tension Vant n'atteint pas la tension Vmax mais s'arrête à une valeur inférieure Vint.

En choisissant la tension de référence Vref du comparateur entre les valeurs attendues Vint et Vmax, la sortie du comparateur 27 bascule deux fois par période T du signal de commande, sauf en présence d'un transpondeur.

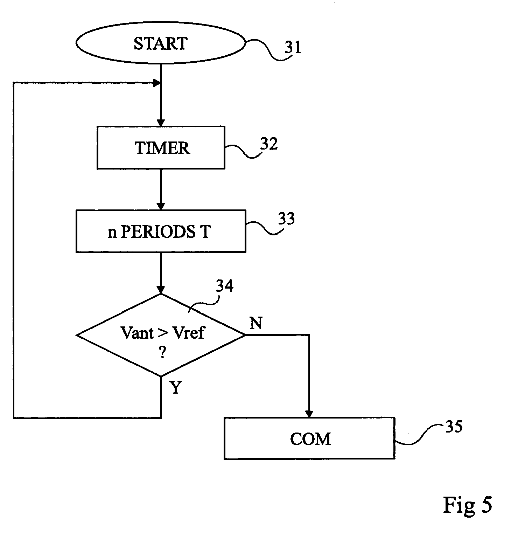

La figure 5 est un organigramme simplifié illustrant un mode de réalisation du procédé de détection.

Une fois le lecteur initialisé (bloc 31, START), ses circuits électroniques déclenchent un compteur temporel (bloc 32, TIMER) pour émettre périodiquement un nombre n (2 dans l'exemple de la figure 4A) de cycles T à fréquence variable (bloc 33, n PERIODS T). La tension aux bornes de l'antenne est comparée (bloc 34, Vant>Vref ?) à la tension de référence pour détecter la présence ou l'absence d'un passage par cette tension de référence. Dans l'affirmative (sortie Y du bloc 34), le processus reprend au niveau de la temporisation 32. Dans la négative (sortie N du bloc 34), cela signifie la présence d'un transpondeur et le terminal peut alors initier une communication (bloc 35, COM) en émettant une trame d'interrogation usuelle. Cela revient à réveiller les circuits du terminal dans un mode où ils consomment plus qu'en mode détection. En particulier, le terminal utilise alors son oscillateur à quartz pour générer une fréquence précise sur laquelle est basée la porteuse de transmission (par exemple, 13,56 MHz).

La comparaison 34 peut s'effectuer de façon temporisée pour tenir compte de la fenêtre temporelle dans laquelle sont émis les n cycles. En variante, la tension Vant est moyennée et le seuil Vref est choisi en conséquence.

Il est désormais possible de détecter la présence d'un transpondeur sans nécessiter un oscillateur à quartz.

Un avantage induit est que, même si les circuits oscillants du transpondeur et/ou du terminal sont désaccordés par rapport à une valeur nominale, la détection s'opère quand même. En effet, quelle que soit la fréquence de résonance entre les fréquences f0 et f1, le système passera forcément par un maximum de tension aux bornes de l'antenne. Par conséquent, il suffit de choisir de façon appropriée le seuil Vref pour être en mesure de détecter la présence d'un transpondeur même en cas de dérive des fréquences d'accord respectives du terminal et du transpondeur.

L'absence de recours à un oscillateur à quartz permet de réduire la consommation pendant la phase de détection. Or, les phases de détection sont généralement prédominantes dans l'utilisation d'un terminal (les périodes de communication sont souvent courtes par rapport aux périodes d'attente). L'économie est donc importante en terme de consommation.

À titre d'exemple particulier de réalisation appliqué à une fréquence de résonance nominale de 13,56 mégahertz, les fréquence f0 et f1 sont d'environ 8 et 20 mégahertz.

Divers modes de réalisation ont été décrits, diverses variantes et modifications apparaîtront à l'homme de l'art. En particulier, la mise en oeuvre pratique des circuits requis pour la détection de présence décrite est à la portée de l'homme du métier à partir des indications fonctionnelles données ci-dessus et en utilisant des circuits en eux-mêmes usuels. Par exemple, au lieu d'un oscillateur contrôlé en tension ou en courant, on pourra exploiter la charge et la décharge d'éléments capacitifs à courant constant pour obtenir l'oscillateur de fréquence variable. Selon un autre exemple particulier de réalisation, l'oscillateur est formé de plusieurs inverseurs en série, alimentés par une tension variable.

De plus, bien que l'on ait fait référence à une mesure de la tension de l'antenne (par rapport à la masse), on peut exploiter tout signal influencé par la charge constituée par un transpondeur dans le champ du terminal.

## Revendications

1. Procédé de détection de présence d'un élément de communication (3) sans contact par un terminal (2) émettant un champ électromagnétique, **caractérisé en ce que** :
un circuit oscillant (28) du terminal est excité par un oscillateur à fréquence variable commandé par un signal (CTRL) en dents de scie, l'oscillateur à fréquence variable fournissant une modulation de fréquence triangulaire entre deux valeurs (f1, f2) encadrant une fréquence d'accord nominale (f_{acc}) du circuit oscillant ; et
un signal (Vant) représentatif de la charge du circuit oscillant est interprété pour détecter une absence de dépassement d'une tension de référence (Vref) indicatrice de la présence d'un élément dans le champ.

2. Procédé selon la revendication 1, dans lequel ledit terminal comporte un oscillateur à quartz (23), celui-ci n'étant pas utilisé pendant la phase d'excitation du circuit oscillant à ladite fréquence rendue variable.

3. Procédé selon la revendication 1 ou 2, dans lequel plusieurs cycles (T) d'excitation à fréquence variable sont émis à intervalles réguliers.

4. Procédé selon l'une quelconque des revendications 1 à 3, dans lequel le signal représentatif est la tension (Vant) d'une antenne (22) d'émission du champ.

5. Procédé de commande d'un terminal (2) émettant un champ électromagnétique pour communication avec un élément sans contact (3), **caractérisé en ce que** des phases de communication sont déclenchées quand un élément est détecté dans le champ conformément au procédé selon l'une quelconque des revendications 1 à 4, un oscillateur à quartz (23) étant utilisé pendant les phases de communication.

6. Circuit de détection de présence d'un élément (3) de communication sans contact, par un terminal (2) d'émission d'un champ radiofréquence ayant un oscillateur à quartz (23) comportant :
un oscillateur (26) à fréquence variable commandé par un signal (CTRL) en dents de scie, l'oscillateur à fréquence variable fournissant une modulation de fréquence triangulaire entre deux valeurs (f1, f2) encadrant une fréquence d'accord nominale (f_{acc}) d'un circuit oscillant, destiné à exciter le circuit oscillant (28) du terminal ; et
un comparateur (27) d'une grandeur (Vant) représentative de la charge du circuit oscillant par rapport à une valeur de référence (Vref).

7. Circuit selon la revendication 6, adapté à la mise en oeuvre du procédé selon l'une quelconque des revendications 1 à 5.

8. Terminal (2) de communication avec au moins un élément de communication sans contact (3), comportant un circuit conforme à la revendication 6 ou 7.

9. Terminal (2) selon la revendication 8, comportant en outre un oscillateur à quartz (23).

## Patentansprüche

1. Verfahren zur Detektion eines kontaktlosen Kommunikationselementes (3) durch einen ein elektromagnetisches Feld emittierenden Anschluss (2) **dadurch gekennzeichnet:**
**dass** eine Oszillationsschaltung (28) des Anschlusses erregt wird durch einen eine variable Frequenz besitzenden Oszillator gesteuert durch ein Sägezahnsignal (CTRL), wobei der eine variable Frequenz besitzende Oszillator eine dreieckige bzw. trianguläre Frequenzmodulation zwischen zwei Werten (f1, f2) vorsieht die eine nominelle Abstimmfrequenz (f_{acc}) der Oszillatorschaltung umgeben; und
**dass** ein Signal (Vant) repräsentativ für die Last der Oszillatorschaltung interpretiert wird um zu Detektieren, dass eine Bezugsspannung (Vref) nicht überschritten wurde, was das Vorhandensein eines Elements im Feld anzeigt.

2. Verfahren nach Anspruch 1, wobei der Anschluss einen Quarzoszillator (23) aufweist, der während der Erregungsphase der Oszillatorschaltung mit der erwähnten variablen Frequenz nicht verwendet wird.

3. Verfahren nach Anspruch 1 oder 2, wobei mehrere Zyklen (T) der Erregung mit der variablen Frequenz mit regelmäßigen Intervallen übertragen werden.

4. Verfahren nach einem der Ansprüche 1 bis 3, wobei das repräsentative Signal die Spannung (Vant) einer Antenne (22) zum Emittieren des Feldes ist.

5. Ein Verfahren zur Steuerung eines Anschlusses (2) der ein elektromagnetisches Feld emittiert und zwar zur Kommunikation mit einem kontaktlosen Element (3) **dadurch gekennzeichnet, dass** die Kommunikationsphasen ausgelöst werden, wenn ein Element in dem Feld gemäß dem Verfahren irgendeines der Ansprüche 1-4 detektiert wird, wobei ein Quarzoszillator (23) während der Kommunikationsphasen verwendet wird.

6. Eine Schaltung zum Detektieren des Vorhandenseins eines kontaktlosen Kommunikationselements (3) durch einen Anschluss (2) der ein Hochfrequenzfeld emittiert und einen Quarzoszillator (23) umfasst, der folgendes aufweist:
einen eine variable Frequenz besitzenden Oszillator (26) gesteuert durch ein Sägezahnsignal (CTRL) wobei der eine eine variable Frequenz besitzende Oszillator eine dreieckige Frequenzmodulation liefert, und zwar zwischen zwei Werten (f1, f2), die eine nominale Abstimmfrequenz (f_{acc}) einer Oszillationsschaltung umgeben und zwar vorgesehen zur Erregung der Oszillationsschaltung (28) des Anschlusses; und
ein Komparator (27) einer Größe (Vant) repräsentativ für die Last der Oszillatorschaltung bezüglich eines Bezugswerts (Vref).

7. Die Schaltung nach Anspruch 6, die in der Lage ist, dass Verfahren irgend eines der Ansprüche 1 bis 5 zu implementieren.

8. Ein Anschluss (2) zur Kommunikation mit mindestens einem kontaktlosen Kommunikationselement (3) und zwar die Schaltung nach Anspruch 6 oder 7 aufweisend.

9. Der Anschluss (2) nach Anspruch 8 wobei ferner ein Quarzoszillator (23) vorgesehen ist.

## Claims

1. A method of detection of the presence of a contactless communication element (3) by a terminal (2) emitting an electromagnetic field, **characterized in that**:
an oscillating circuit (28) of the terminal is excited by a variable-frequency oscillator controlled by a saw-tooth signal (CTRL), the variable-frequency oscillator providing a triangular frequency modulation between two values (f1, f2) surrounding a nominal tuning frequency (f_{acc}) of the oscillating circuit; and
a signal (Vant) representative of the load of the oscillating circuit is interpreted to detect that a reference voltage (Vref) has not been exceeded, which indicates the presence of an element in the field.

2. The method of claim 1, wherein said terminal comprises a quartz oscillator (23), which is not used during the excitation phase of the oscillating circuit at said variable frequency.

3. The method of claim 1 or 2, wherein several cycles (T) of excitation at variable frequency are transmitted at regular intervals.

4. The method of any of claims 1 to 3, wherein the representative signal is the voltage (Vant) of an antenna (22) for emitting the field.

5. A method for controlling a terminal (2) emitting an electromagnetic field for communication with a contactless element (3), **characterized in that** communication phases are triggered when an element is detected in the field according to the method of any of claims 1 to 4, a quartz oscillator (23) being used during the communication phases.

6. A circuit of detection of the presence of a contactless communication element (3) by a terminal (2) emitting a radiofrequency field and comprising a quartz oscillator (23), comprising:
a variable-frequency oscillator (26) controlled by a saw-tooth signal (CTRL), the variable-frequency oscillator providing a triangular frequency modulation between two values (f1, f2) surrounding a nominal tuning frequency (f_{acc}) of an oscillating circuit, intended to excite the oscillating circuit (28) of the terminal; and
a comparator (27) of a quantity (Vant) representative of the load of the oscillating circuit with respect to a reference value (Vref).

7. The circuit of claim 6, capable of implementing the method of any of claims 1 to 5.

8. A terminal (2) of communication with at least one contactless communication element (3), comprising the circuit of claim 6 or 7.

9. The terminal (2) of claim 8, further comprising a quartz oscillator (23).
